# EUROPÄISCHE PATENTANMELDUNG

(11) **EP 3 425 575 A1**
(43) Veröffentlichungstag der Anmeldung: **09.01.2019**
(21) Anmeldenummer: 18181657.0
(22) Anmeldetag: 04.07.2018
(51) Int. Cl.: G06Q 10/08

(54) **VERFAHREN ZUM AUSLIEFERN VON MIT EINER ZIELADRESSE VERSEHENEN OBJEKTEN UNTER VERWENDUNG EINES TRANSPORTFAHRZEUGS**

(30) Priorität: 04.07.2017 DE 102017114875
(71) Anmelder: dff solutions GmbH, 37079 Göttingen (DE)
(72) Erfinder: Felix, Dossmann, 37075 Göttingen (DE)
(74) Vertreter: REHBERG HÜPPE + PARTNER

(57) **Zusammenfassung**

Zum Ausliefern von mit Zieladressen (a bis e) versehenen Objekten (2) an zum Empfang autorisierte, ihren Aufenthaltsort potentiell ändernde und ein Empfänger-Mobilkommunikationsgerät (9) mit sich führende Empfänger (8) unter Verwendung eines Transportfahrzeugs (1), dem ein Auslieferer-Mobilkommunikationsgerät (4) zugeordnet ist, werden die Positionen der Empfänger-Mobilkommunikationsgeräte (9) ermittelt mit den Zieladressen (a bis e) abgeglichen, um zu ermitteln, ob sich der zum Empfang des jeweiligen Objekts (2) autorisierte Empfänger (8) aktuell an der zugehörigen Zieladresse (a bis e) aufhält. Die Position des Auslieferer-Mobilkommunikationsgeräts (4) wird ermittelt; und von dem Auslieferer-Mobilkommunikationsgerät (4) wird ein Anzeigebild angezeigt, das abhängig von dem Ergebnis des Abgleichens der ermittelten Positionen der Empfänger-Mobilkommunikationsgeräte (9) mit den Zieladressen (a bis e) generiert wird. Außerdem wird dann, wenn sich das Auslieferer-Mobilkommunikationsgerät (4) einem der Empfänger-Mobilkommunikationsgeräte (9) annähert, und auch dann, wenn dies über das Auslieferer-Mobilkommunikationsgerät (4) ausgelöst wird, ein Hinweissignal über das Empfänger-Mobilkommunikationsgerät (9) ausgegeben.

## Beschreibung

### TECHNISCHES GEBIET DER ERFINDUNG

Die Erfindung bezieht sich auf ein Verfahren zum Ausliefern von jeweils mit einer Zieladresse versehenen Objekten unter Verwendung eines Transportfahrzeugs. Insbesondere bezieht sich die vorliegende Erfindung auf ein Verfahren mit den Merkmalen des Oberbegriffs des unabhängigen Patenanspruchs 1.

Bei den mit jeweils einer Zieladresse versehenen Objekten kann es sich insbesondere um Briefe und/oder Pakete handeln. Das Transportfahrzeug kann grundsätzlich ein Fahrrad sein. In der Regel wird es sich um ein motorisiertes Transportfahrzeug handeln, häufig um einen Lieferwagen oder Klein-Lkw.

### STAND DER TECHNIK

Durch den zunehmenden Internethandel nimmt die Stückzahl der täglich auszuliefernden Warensendungen in Form von Paketen stark zu. Die Auslieferung der Pakete erfolgt mit Transportfahrzeugen an die jeweilige Zieladresse der Pakete. Zwar sind Paketkästen bekannt, die zum Einwerfen oder Ablegen von Paketen an einen bestimmten Empfänger vorgesehen sind, doch werden Pakete in der Regel an eine an der Zieladresse angetroffene Person übergeben. Dies ist für den Fahrer des jeweiligen Transportfahrzeugs, d. h. den Auslieferer der Pakete zeitaufwändig, da er häufig warten muss, bis eine Person an der jeweiligen Wohnungstür erscheint, sofern dies überhaupt passiert. Der Zeitaufwand ist insoweit besonders relevant, weil dem Auslieferer für das Ausliefern der Pakete im Mittel nur wenig Zeit zugestanden wird. Wenn der Auslieferer oder Zusteller an der jeweiligen Zieladresse keine Person antrifft, kann er, je nach Markierung der jeweiligen Sendung, auch eine Ersatzzustellung an einen Nachbarn vornehmen, soweit er diesen antrifft. Vielfach ist aber weder eine Ersatzzustellung an einen Nachbarn erwünscht, und wenn eine persönliche Zustellung durchzuführen ist, reicht es auch nicht aus, irgendeine Person an der jeweiligen Zieladresse anzutreffen. Dies hat zur Folge, dass Auslieferer von Paketen oft mehrere Zustellversuche für ein Paket unternehmen müssen, was ihren Zeitaufwand besonders erhöht. Darüber hinaus kommt es bei der Zustellung einzelner Pakete zu Verzögerungen, weil beispielsweise der vorgesehene Empfänger erst bei einem späteren Zustellversuch erreicht wird oder weil der Auslieferer an einem Tag überhaupt keine Chance mehr hat, einen Zustellversuch zu unternehmen, weil ihn die Zustellversuche für andere Pakete zu lange aufgehalten haben. Darüber hinaus treten Fälle auf, in denen Auslieferer Pakete an einer Zieladresse einfach ablegen oder an hierfür nicht autorisierte Personen übergeben, um die Zustellung der ihnen zugeteilten Pakete bewältigen zu können. Dies ist beispielsweise bei wertvollen und sicherheitsrelevanten Inhalten der Pakete äußerst kritisch.

Für den Empfänger der Pakete hat die bisherige Praxis bei der Zustellung von Paketen weitere Nachteile. Er ist an die angegebene Zieladresse längerfristig gebunden, wenn er die Zustellung eines Paketes an ihn an einem bestimmten Tag sicherstellen will. Um dieses Problem zu reduzieren ist es bekannt, die Zustellung von Paketen mithilfe so genannter Trackingnummern über das Internet zu verfolgen. Die Eingabe der Trackingnummer in eine Maske eines Internetprogramms erlaubt es, dessen bisherigen Zustellweg nachzuverfolgen bis in das jeweilige Transportfahrzeug, mit dem seine Auslieferung erfolgen soll. Die aktuelle Position des entsprechenden Transportfahrzeugs wird ermittelt und dem Empfänger beispielsweise in Form einer markierten Position in einer Straßenkarte angezeigt. Hieraus kann der Empfänger grob abschätzen, ob sich das Transportfahrzeug schon der Zieladresse nähert und wann es diese ungefähr erreichen wird.

Weiterhin sind Paketstationen, d. h. dezentrale Paketausgabeautomaten bekannt, die als Zieladresse für mehrere Empfänger dienen und die die an sie übergebenen Pakete an die zugehörigen Empfänger automatisch ausgeben, wenn sich diese hierfür z. B. mit eine PIN autorisieren.

Viele Mobilkommunikationsgeräte, wie beispielsweise so genannte Smartphones, bieten die Möglichkeit, die Position des Mobilkommunikationsgeräts zu erfassen, beispielsweise über das GPS. Es ist auch bekannt, diese Position von einer Zentraleinheit aus zu verfolgen, um beispielsweise den Ort eines entwendeten Mobilkommunikationsgeräts zu dessen Wiederbeschaffung festzustellen. Es ist auch bekannt, einer Gruppe von Besitzern von Mobilkommunikationsgeräten wechselseitig über ein Anzeigebild auf ihren Mobilkommunikationsgeräten anzuzeigen, wo sich die anderen Mitglieder der Gruppe bzw. deren Mobilkommunikationsgeräte aufhalten.

Verfahren mit den Merkmalen des Oberbegriffs des unabhängigen Patenanspruchs 1 ist aus der DE 10 2007 048 979 A1 bekannt.

### AUFGABE DER ERFINDUNG

Der Erfindung liegt die Aufgabe zugrunde, ein Verfahren zum Ausliefern von mit einer Zieladresse versehenen Objekten unter Verwendung eines Transportfahrzeugs aufzuzeigen, das besonders effizient ist, indem es die für das Aufliefern eines einzelnen Objekts benötigte Zeit minimiert und zugleich den Empfängern der Objekte maximale Freiheit einräumt.

### LÖSUNG

Die Aufgabe der Erfindung wird durch ein Verfahren mit den Merkmalen des unabhängigen Patentanspruchs 1 gelöst. Bevorzugte Ausführungsformen des erfindungsgemäßen Verfahrens sind in den abhängigen Patentansprüchen definiert.

### BESCHREIBUNG DER ERFINDUNG

Bei einem erfindungsgemäßen Verfahren zum Ausliefern von jeweils mit einer Zieladresse versehenen Objekten an jeweils zum Empfang eines der Objekte autorisierte, ihren Aufenthaltsort ändernde und ein Empfänger-Mobilkommunikationsgerät mit sich führende Empfänger unter Verwendung eines Transportfahrzeugs, dem ein Auslieferer-Mobilkommunikationsgerät zugeordnet ist, werden die Positionen der Empfänger-Mobilkommunikationsgeräte ermittelt. Die ermittelten Positionen der Empfänger-Mobilkommunikationsgeräte werden mit den Zieladressen abgeglichen, um zu ermitteln, ob sich der zum Empfang des jeweiligen Objekts autorisierte Empfänger aktuell an der zugehörigen Zieladresse aufhält; und von dem Auslieferer-Mobilkommunikationsgerät wird ein Anzeigebild angezeigt, das abhängig von dem Ergebnis des Abgleichens der ermittelten Positionen der Empfänger-Mobilkommunikationsgeräte mit den Zieladressen generiert wird.

Zudem wird die Position des Auslieferer-Mobilkommunikationsgeräts ermittelt, und es wird dann, wenn sich das Auslieferer-Mobilkommunikationsgerät einem der Empfänger-Mobilkommunikationsgeräte annähert, und/oder dann, wenn dies über das Auslieferer-Mobilkommunikationsgerät ausgelöst wird, über das Empfänger-Mobilkommunikationsgerät ein Hinweissignal ausgegeben. Dieses Hinweissignal kann einerseits für den Empfänger bestimmt sein, um ihn auf den Auslieferer, d. h. auf das Transportfahrzeug oder dessen Fahrer aufmerksam zu machen. Das Hinweissignal kann aber auch dem Fahrer des Transportfahrzeugs zum Beispiel akustisch den Weg zu dem autorisierten Empfänger für ein aktuell auszulieferndes Objekt weisen.

Wie schon eingangs erläutert wurde, kann es sich bei den Objekten insbesondere um Briefe oder Pakete, aber auch um jegliche andere Sendungen von Gegenständen handeln.

Das Ausliefern dieser Objekte kann auch als Zustellen der Objekte an den jeweiligen Empfänger bezeichnet werden.

Dass die zum Empfang eines der Objekte autorisierten Empfänger in der Definition des erfindungsgemäßen Verfahrens als "ihren Aufenthaltsort potentiell ändernde Empfänger" bezeichnet sind, soll sowohl Fälle abdecken, in denen die Empfänger ihren Aufenthaltsort tatsächlich ändern, als auch Fälle, in denen sie ihren Aufenthaltsort tatsächlich nicht ändern.

Dass bei dem erfindungsgemäßen Verfahren Objekte an solche Empfänger ausgeliefert werden, die zudem ein Mobilkommunikationsgerät mit sich führen, das für das Verfahren genutzt wird, schließt nicht aus, dass parallel mit demselben Transportfahrzeug auch Objekte an Empfänger ausgeliefert werden, die kein Mobilkommunikationsgerät mit sich führen oder zumindest keines, das an dem erfindungsgemäßen Verfahren beteiligt ist.

Das Transportfahrzeug kann, wie bereits eingangs festgestellt wurde, grundsätzlich auch ein muskelkraftbetriebenes Fahrrad sein. In der Regel wird es sich jedoch um ein motorisiertes Transportfahrzeug, wie beispielsweise einen Lieferwagen in Form eines Klein-Lkw handeln.

Dass dem Transportfahrzeug ein Auslieferer-Mobilkommunikationsgerät zugeordnet ist, bedeutet nicht zwingend, dass das Mobilkommunikationsgerät fest in dem Transportfahrzeug installiert ist. Es kann auch von einem Fahrer des Transportfahrzeugs mit sich geführt werden. Das Auslieferer-Mobilkommunikationsgerät kann auch grundsätzlich fest in dem Transportfahrzeug installiert sein und der Fahrer des Transportfahrzeugs kann ein zusätzliches Endgerät des Auslieferer-Mobilkommunikationsgerät mit sich führen, das mit der im Transportfahrzeug installierten Einheit synchronisiert ist.

Dass die ermittelten Positionen der Empfänger-Mobilkommunikationsgeräte mit den Zieladressen abgeglichen werden, um zu ermitteln, ob sich der zum Empfang des jeweiligen Objekts autorisierte Empfänger aktuell an der zugehörigen Zieladresse aufhält, impliziert, dass die Positionen der Empfänger-Mobilkommunikationsgeräte und die Zieladressen in dasselbe Koordinatensystem übertragen werden. Dieses Koordinatensystem kann das der Geoposition in Längen- und Breitengraden sein. Es kann aber auch ein gerastertes Koordinatensystem und/oder eine auf einzelne Gebäude oder Adressen gerasterte Straßenkarte sein.

Die Ermittlung, ob sich der zum Empfang des jeweiligen Objekts autorisierte Empfänger aktuell an der zugehörigen Zieladresse aufhält, impliziert zudem, dass bei dem erfindungsgemäßen Verfahren die Positionen der Empfänger-Mobilkommunikationsgeräte wiederholt oder sogar fortlaufend ermittelt und die ermittelten Positionen wiederholt oder sogar fortlaufend mit den Zieladressen abgeglichen werden.

Mit dem von dem Auslieferer-Mobilkommunikationsgerät angezeigten Anzeigebild, das abhängig von dem Ergebnis des Abgleichens der ermittelten Positionen der Empfänger-Mobilkommunikationsgeräte mit den Zieladressen generiert wird, kann dem Fahrer des Transportfahrzeugs zum Beispiel angezeigt werden, dass sich bestimmte Empfänger nicht an bestimmten Zieladressen aufhalten, so dass das Anfahren dieser Zieladressen fruchtlos wäre. Der Fahrer des Transportfahrzeugs spart so erheblich Zeit für nicht fruchtlos angefahrene Zieladressen ein. Umgekehrt weiß er sicher, dass sich an den von ihm im Rahmen des erfindungsgemäßen Verfahrens angefahrenen Zieladressen die zugehörigen Empfänger aufhalten, so dass es auch lohnend sein kann, etwas länger auf deren Erscheinen an der jeweiligen Wohnungstür zu warten.

Das Anzeigebild, das abhängig von dem Ergebnis des Abgleichens der ermittelten Positionen der Empfänger-Mobilkommunikationsgeräte mit den Zieladressen generiert wird, kann eine Liste der Zieladressen sein, in der markiert ist, an welchen Zieladressen sich der zugehörige Empfänger nicht aufhält und/oder an welchen Zieladressen sich der zugehörige Empfänger aufhält. Alternativ oder zusätzlich kann das Anzeigebild eine abzufahrende Fahrtroute für das Transportfahrzeug anzeigen. Insbesondere kann diese abzufahrende Fahrtroute nicht zu den Zieladressen führen, an denen sich die zugehörigen Empfänger aktuell nicht aufhalten oder nur zu den Zieladressen, an denen sich die zugehörigen Empfänger aktuell aufhalten. Mit anderen Worten wird durch das erfindungsgemäße Verfahren eine Navigation für das Transportfahrzeug bereitgestellt, die zu einer raschen Auslieferung aller aktuell auslieferbaren Objekte führt.

Das Anzeigebild, das auf dem Auslieferer-Mobilkommunikationsgerät angezeigt wird, kann in oder an dem Auslieferer-Mobilkommunikationsgerät selbst generiert werden. Es kann aber auch in einer stationären Zentraleinheit generiert werden, die das Anzeigebild mittels Mobilkommunikation an das Auslieferer-Mobilkommunikationsgerät übermittelt.

Auch das Abgleichen der ermittelten Positionen der Empfänger-Mobilkommunikationsgeräte kann bei dem erfindungsgemäßen Verfahren an verschiedenen Stellen erfolgen. Beispielsweise kann das Abgleichen der ermittelten Positionen der Empfänger-Mobilkommunikationsgeräte mit den Zieladressen in den Empfänger-Mobilkommunikationsgeräten selbst durchgeführt werden. Die Empfänger-Mobilkommunikationsgeräte können dann jeweils ein Ergebnissignal ausgeben, das einen Wert aufweist, wenn das Ergebnis des Abgleichens für das jeweilige Empfänger-Mobilkommunikationsgerät und die zugehörige Zieladresse positiv ist, und/oder einen zweiten Wert aufweist, wenn das Ergebnis des Abgleichens negativ ist. Das Ergebnissignal zeigt dann nur an, ob sich der jeweilige Empfänger an der zugehörigen Zieladresse aufhält. Das Empfänger-Mobilkommunikationsgerät gibt aber darüber hinaus den Aufenthaltsort des jeweiligen Empfängers nicht preis. Das Ergebnissignal kann dann für das Generieren des Anzeigebilds an das Auslieferer-Mobilkommunikationsgerät und/oder die stationäre Zentraleinheit übermittelt werden.

Grundsätzlich können die Empfänger-Mobilkommunikationsgeräte auch ihre ermittelten Positionen an das Auslieferer-Mobilkommunikationsgerät und/oder die Zentraleinheit übermittelt. Dadurch wird es beispielsweise möglich, die zugehörige Zieladresse durch die ermittelte Position des Empfänger-Mobilkommunikationsgeräts zu ersetzen. Diese Ersetzung wird jedoch sinnvollerweise auf solche Fälle beschränkt, in denen zu dem jeweiligen Empfänger-Mobilkommunikationsgerät ein Aktualisierungsflag gesetzt ist. Insbesondere kann dieses Aktualisierungsflag von dem zugehörigen Empfänger selbst gesetzt werden, der damit entscheidet, ob die zu dem für ihn bestimmten Objekt zugehörige Zieladresse in seine aktuelle Position geändert wird oder nicht.

Bei dem erfindungsgemäßen Verfahren ist es vorteilhaft, dass auch die Position des Auslieferer-Mobilkommunikationsgeräts ermittelt wird. Dadurch kann insbesondere das Anzeigebild abhängig von der ermittelten Position des Auslieferer-Mobilkommunikationsgeräts generiert werden. Dies ist beispielsweise bereits Voraussetzung dafür, das erfindungsgemäße Verfahren zum Navigieren des Transportfahrzeugs zu verwenden.

Darüber hinaus kann ein weiteres Anzeigebild auf Anfrage auf den einzelnen Empfänger-Mobilkommunikationsgeräten angezeigt werden, das abhängig von der Position des Auslieferer-Mobilkommunikationsgeräts generiert wird, so dass es die ermittelte Position des Auslieferer-Mobilkommunikationsgeräts beispielsweise in einer Straßenkarte anzeigt. Wenn der jeweilige Empfänger diese Anfrage durchführt, kann er so ermitteln, wo sich das Transportfahrzeug bzw. sein Fahrer aktuell aufhält. Zudem kann das weitere Anzeigebild so generiert werden, dass es die abzufahrende Fahrtroute des Transportfahrzeugs anzeigt und/oder anzeigt, wann die zu dem jeweiligen Empfänger-Mobilkommunikationsgerät zugehörige Adresse voraussichtlich erreicht werden wird. Insbesondere in Verbindung mit dem erfindungsgemäßen Hinweissignal eröffnet dies dem jeweiligen Empfänger die Möglichkeit, sich zu dem Transportfahrzeug bzw. hinzubewegen, um die Auslieferung des jeweiligen Objekts an ihn zu beschleunigen.

In diesem Zusammenhang kann dann, wenn dies über das jeweilige Empfänger-Mobilkommunikationsgerät ausgelöst wird, ein Selbstabholersignal zu dem Objekt mit der zugehörigen Zieladresse an das Auslieferer-Mobilkommunikationsgerät übermittelt werden. Der Fahrer des Transportfahrzeugs weiß dann, dass sich der jeweilige Empfänger zu ihm begibt und nicht aufgesucht werden muss.

Das erfindungsgemäße Verfahren kann auch Maßnahmen umfassen, die sicherstellen, dass die Objekte nur an die hierzu autorisierten Empfänger ausgegeben werden, und die die dafür notwendigerweise durchzuführende Autorisierung beschleunigen. So kann über das jeweilige Empfänger-Mobilkommunikationsgerät ein Autorisierungscode für den Empfang des Objekts mit der zugehörigen Zieladresse ausgegeben werden. Dieser Autorisierungscode kann mithilfe einer Kamera oder eines Scanners des Auslieferer-Mobilkommunikationsgeräts eingelesen werden und infolge des Einlesens deaktiviert werden. Damit ist die Grundlage für eine Dokumentation geschaffen, dass der Auslieferer den autorisierten Empfänger bzw. dessen Empfänger-Mobilkommunikationsgerät tatsächlich angetroffen hat.

Ein derartiger Autorisierungscode auf dem Empfänger-Mobilkommunikationsgerät und dessen Einlesen mithilfe einer Kamera oder eines Scanners des Auslieferer-Mobilkommunikationsgeräts kann auch dazu genutzt werden, das jeweilige Objekt mit der jeweiligen Zieladresse zu dem eingelesenen Autorisierungscode mit einem auf dem Transportfahrzeug installierten Objektausgabeautomaten automatisch auszugeben. Das Transportfahrzeug dient damit als mobile Paketstation für die Selbstabholung von Paketen. Die aktuelle Position dieser mobilen Paketstation und auch ihre voraussichtlichen zukünftigen Positionen werden den Empfängern der in dem Transportfahrzeug befindlichen Objekte zugänglich gemacht, und diese können die Auslieferung an sie durch Selbstabholung beschleunigen und dies vorher mitteilen, so dass auch der Fahrer des Transportfahrzeugs von der Selbstabholung des jeweiligen Pakets maximal profitiert.

Die Position des Auslieferer-Mobilkommunikationsgeräts kann ebenso wie die Positionen der Empfänger-Mobilkommunikationsgeräte grundsätzlich mittels des GPS (Global Positioning System) bestimmt werden. Hierbei können auch Techniken zur Erhöhung der Genauigkeit der Positionsbestimmung eingesetzt werden, die unter dem Stichwort "assisted GPS" bekannt sind und bei der die Lokalisierung des jeweiligen Mobilkommunikationsgeräts auch unter Verwendung anderer Signale als derjenigen der GPS-Satelliten, wie beispielsweise Signale von anderen Telekommunikationssendern an bekannten Positionen, durchgeführt wird.

Beim Annähern der Auslieferer-Mobilkommunikationsgeräts an ein bestimmtes der Empfänger-Mobilkommunikationsgeräte kann eine Navigation des Auslieferer-Mobilkommunikationsgeräts zu dem bestimmten der Empfänger-Mobilkommunikationsgeräte oder umgekehrt des bestimmten der Empfänger-Mobilkommunikationsgeräte zu dem Auslieferer-Mobilkommunikationsgerät mittels eines WLAN oder WPAN, d. h. eines drahtlosen lokalen oder persönlichen Netzwerks erfolgen. Über dieses WLAN oder WPAN können das Auslieferer-Mobilkommunikationsgerät und das bestimmte der Empfänger-Mobilkommunikationsgeräte miteinander kommunizieren und/oder Lokalisierungssignale von sogenannten Beacons empfangen. Eine derartige Navigation ist anders als mithilfe der GPS-Signale von GPS-Satelliten auch innerhalb von Gebäuden möglich.

Insgesamt sorgt das erfindungsgemäße Verfahren dafür, dass absehbar erfolgslose Zustellungshandlungen vermieden werden, dass die jeweiligen Objekte tatsächlich die zu ihrem Empfang autorisierten Empfänger erreichen und dass die Empfänger eine maximale Flexibilität bzgl. ihres Aufenthaltsorts haben, ohne hierdurch die Auslieferung eines Objekts an sie unmöglich zu machen.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Mobilkommunikationsgerät die Rede ist, ist dies so zu verstehen, dass genau ein Mobilkommunikationsgerät, zwei Mobilkommunikationsgeräte oder mehr Mobilkommunikationsgeräte vorhanden sind. Die in den Patentansprüchen angeführten Merkmale können durch andere Merkmale ergänzt werden oder die einzigen Merkmale sein, die das jeweilige Verfahren aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: illustriert die Ausgangssituation des erfindungsgemäßen Verfahrens.
- **Fig. 2**: illustriert verschiedene Fahrtrouten eines Transportfahrzeugs für Objekte bei der Durchführung des erfindungsgemäßen Verfahrens.
- **Fig. 3**: ist ein Ablaufdiagramm des erfindungsgemäßen Verfahrens.

### FIGURENBESCHREIBUNG

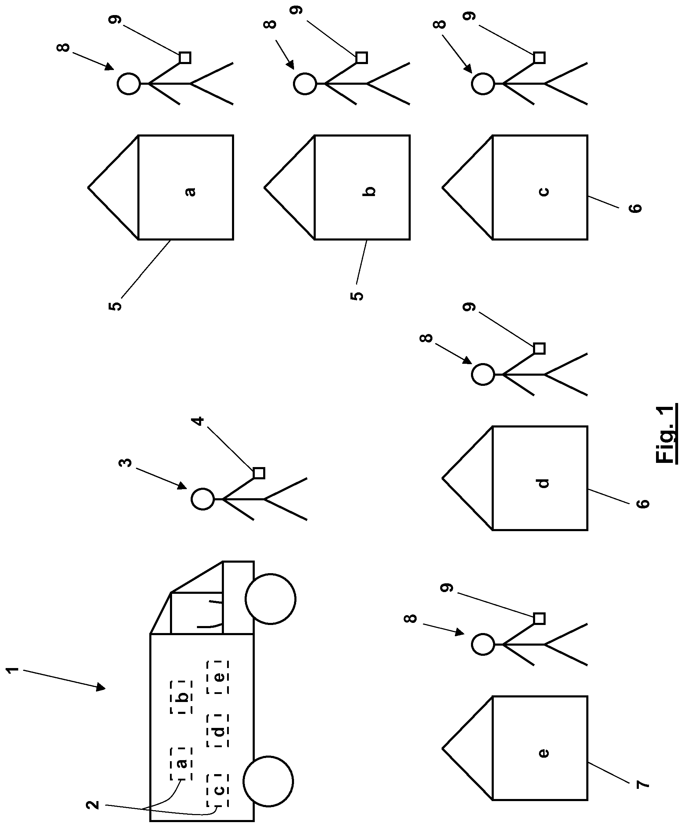

**Fig. 1** zeigt schematisch ein Transportfahrzeug 1, in dem sich eine Mehrzahl von Objekten 2 befindet. Die Objekte 2 sind jeweils mit einer Zieladresse a bis e versehen. Zudem sind zu den einzelnen Objekten 2 auch die zum Empfang der Objekte 2 autorisierten Empfänger registriert. Das Transportfahrzeug 1 wird von einem Fahrer 3 gefahren, der auch die Objekte 2 ausliefert und der hier neben dem Transportfahrzeug 1 dargestellt ist. Dem Transportfahrzeug 1 ist weiterhin ein Auslieferer-Mobilkommunikationsgerät 4 zugeordnet, das hier von dem Fahrer 3 mit sich geführt wird. Jede der Zieladressen a bis e ist diejenige einer Wohnung 5 oder eines Büros 6 oder eines anderen Aufenthaltsorts 7 eines zum Empfang eines der Objekte 2 autorisierten Empfängers 8. Jeder der Empfänger 8 führt ein Empfänger-Mobilkommunikationsgerät 9 mit sich. Jeder der Empfänger 8 kann sich an der jeweiligen Zieladressen a bis e aufhalten, sich aber auch von dieser entfernen. Ob sich der jeweilige Empfänger 8 an der jeweiligen Zieladresse a bis e aufhält, wird ermittelt, indem die Positionen der Empfänger-Mobilkommunikationsgeräte 9 ermittelt und mit den Zieladressen a bis e abgeglichen werden, um festzustellen, welcher der Empfänger 8 sich an derjenigen der Zieladressen a bis e aufhält, die einem der Objekte 2 zugeordnet ist, zu dessen Empfang er autorisiert ist. Das Ergebnis dieses Abgleichs wird verwendet, um ein Anzeigebild auf dem Auslieferer-Mobilkommunikationsgerät 4 zu generieren, aus dem der Fahrer 3 die Informationen entnehmen kann, welche der Zieladressen a bis e von ihm sinnvollerweise angefahren werden und welche nicht.

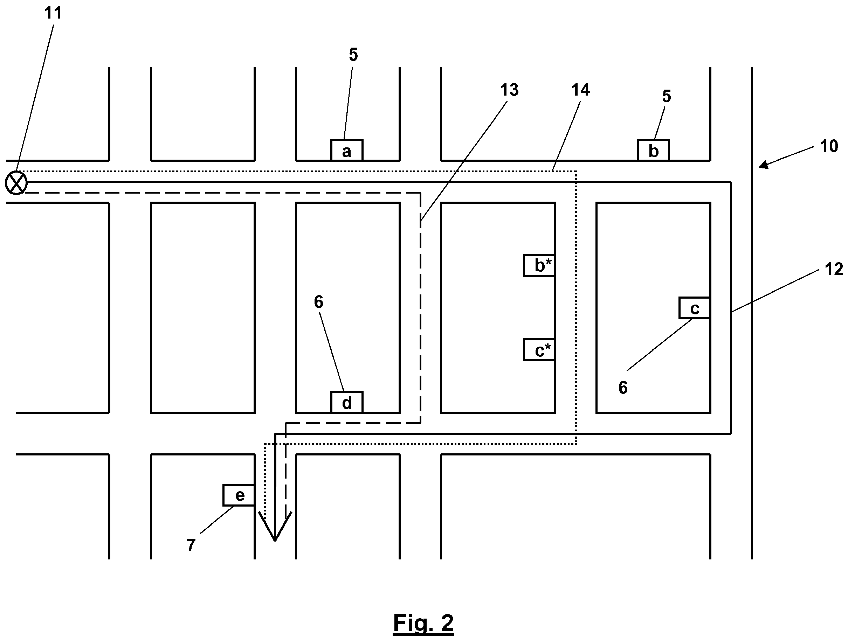

Beispielsweise kann das Anzeigebild eine mit dem Transportfahrzeug 1 abzufahrende Fahrtroute anzeigen, wie dies in der Straßenkarte 10 gemäß **Fig. 2** skizziert ist. In der Straßenkarte 10 sind die Adressen a bis e markiert. Weiterhin ist die aktuelle Position 11 des Transportfahrzeugs 1 markiert, die zusätzlich mithilfe des Auslieferer-Mobilkommunikationsgeräts 4 ermittelt wurde. Von dieser aktuellen Position 11 führt eine mit durchgezogener Linie eingezeichnete Fahrtroute 12 nacheinander zu den Zieladressen a bis e. Diese Fahrtroute wird von dem Fahrer 3 des Transportfahrzeugs 1 sinnvollerweise aber nur dann abgefahren, wenn sich an allen Zieladressen a bis e die zugehörigen Empfänger 8 aufhalten. Wenn sich beispielsweise die zu den Zieladressen b und c zugehörigen Empfänger 8 nicht an diesen Zieladressen b und c aufhalten, ist stattdessen das Abfahren der gestrichelt dargestellten Fahrtroute 13 sinnvoll, die die Zieladressen b und c ausspart, da ein Anfahren dieser Zieladressen nur einen Zeitverlust bedeuten würde. Punktiert ist eine Fahrtroute 14 dargestellt, die mit dem Transportfahrzeug 1 sinnvollerweise abgefahren wird, wenn sich die zu den Zieladressen b und c zugehörigen Empfänger statt an den Zieladressen b und c an Positionen b* und c* befinden und sie ein Aktualisierungsflag gesetzt haben, das dazu führt, dass die Zieladressen b und c der Objekte 2, zu deren Empfang sie autorisiert sind, auf ihre aktuellen Positionen b* und c* aktualisiert werden. Wenn es sich bei den neuen Zieladressen b* und c* beispielsweise nicht um solche einer Wohnung sondern eines öffentlichen Bereichs handelt, ist es vorteilhaft, wenn über das Empfänger-Mobilkommunikationsgerät ein Hinweissignal ausgegeben wird, das sowohl den Empfänger 8 als auch den Fahrer 3 auf den Ort des Empfängers 8 aufmerksam macht, wenn sich das Auslieferer-Mobilkommunikationsgerät 4 dem jeweiligen Empfänger-Mobilkommunikationsgerät 9 annähert oder wenn dies über das Auslieferer-Mobilkommunikationsgerät 4 ausgelöst wird.

Weiter kann der Fahrer die Autorisierung des jeweiligen Empfängers 8 zum Empfang des jeweiligen Objekts 2 dadurch überprüfen, dass er einen an dem jeweiligen Empfänger-Mobilkommunikationsgerät 9 angezeigten Autorisierungscode mithilfe seines Auslieferer-Mobilkommunikationsgeräts 4 einliest. Hiermit wird auch eine Dokumentation dafür bereitgestellt, dass der Fahrer 3 den jeweiligen Empfänger 8 bzw. dessen Empfänger-Mobilkommunikationsgerät 9 tatsächlich angetroffen hat. Weiterhin kann der Autorisierungscode des Empfängers 8 infolge des Einlesens mit dem Auslieferer-Mobilkommunikationsgerät 4 deaktiviert werden.

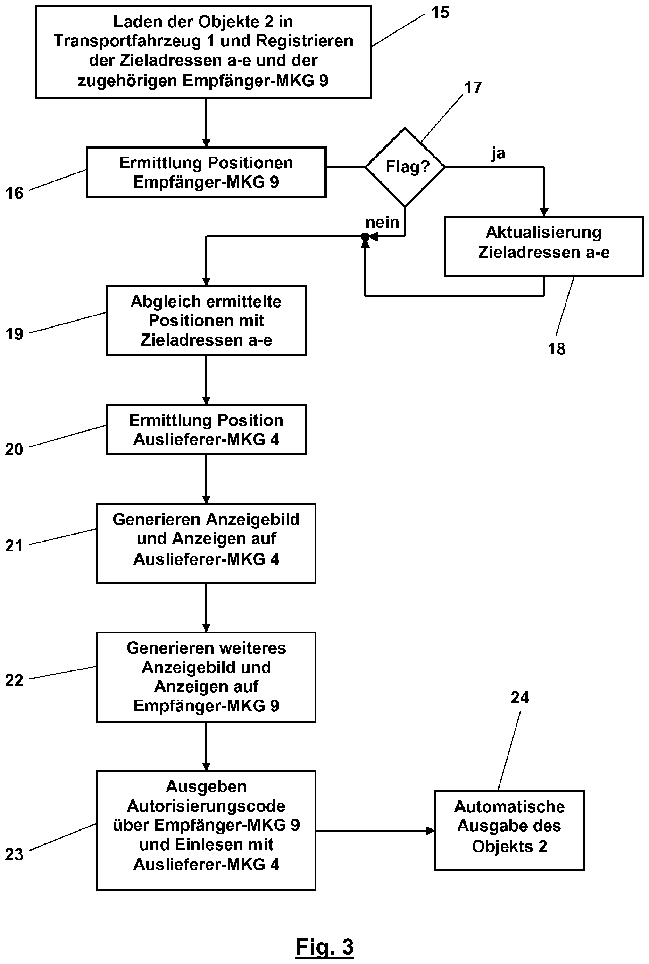

**Fig. 3** illustriert das erfindungsgemäße Verfahren in Form eines Blockdiagramms. In einem Initialisierungsschritt 15 werden die Objekte 2 in das Transportfahrzeug 1 geladen und die zugehörigen Zieladressen a bis e werden samt der zugehörigen Empfänger-Mobilkommunikationsgeräte 9 registriert. In einem Schritt 16 werden die Positionen der Empfänger-Mobilkommunikationsgeräte 9 ermittelt. Dann erfolgt die Überprüfung 17, ob das Aktualisierungsflag zu den jeweiligen Empfänger-Mobilkommunikationsgeräten 9 gesetzt ist. Wenn ja, erfolgt bei sich nicht an dem ursprünglichen Zieladressen a bis e aufhaltendenden Empfängern 8 eine Aktualisierung der Zieladressen a bis e in einem Schritt 18. Die Überprüfung 17 und der Schritt 18 können auch erst nach einem Schritt 19 durchgeführt werden, in dem ein Abgleich der ermittelten Positionen der Empfänger-Mobilkommunikationsgeräte 9 mit den Zieladressen a bis e erfolgt. Wenn dieser Schritt 19 nach dem Schritt 18 durchgeführt wird, handelt es sich bei den Zieladressen a bis e, mit denen der Abgleich erfolgt, bereits um die aktualisierten Zieladressen. In einem Schritt 20, der auch schon zeitgleich mit dem Schritt 16 durchgeführt werden kann, erfolgt die Ermittlung der Position des Auslieferer-Mobilkommunikationsgeräts 4. In einem Schritt 21 wird das Anzeigebild beispielsweise gemäß Fig. 2 generiert und auf dem Auslieferer-Mobilkommunikationsgerät 4 angezeigt. In einem Schritt 22 wird ein weiteres Anzeigebild generiert und auf Anfrage durch die jeweiligen Empfänger 8 auf den Empfänger-Mobilkommunikationsgeräten 9 angezeigt. Bei diesem Anzeigebild kann es sich um ein Fig. 2 entsprechendes Bild handeln, in dem aber nur die Zieladresse des jeweiligen Empfängers angezeigt ist. In einem Schritt 23 erfolgt das Ausgeben des Autorisierungscodes über das jeweilige Empfänger-Mobilkommunikationsgerät 9 und dessen Einlesen mit dem Auslieferer-Mobilkommunikationsgerät 4. Hieran kann sich ein automatisches Ausgeben des jeweiligen Objekts 2 durch einen Automaten auf dem Transportfahrzeug 1 in einem Schritt 24 anschließen.

Die Reihenfolge der Schritte 15 bis 24 kann auch an anderer Stelle von Fig. 3 abweichen, als es in der Beschreibung von Fig. 3 ausdrücklich erwähnt ist. Weiterhin können die Schritte 16 bis 22 fortlaufend wiederholt durchgeführt werden, um sich ändernde Positionen der Empfänger-Mobilkommunikationsgeräte 9 und des Auslieferer-Mobilkommunikationsgeräts 4 und auch zu unterschiedlichen Zeiten unterschiedlich gesetzte Aktualisierungsflags bei der Überprüfung 17 zu berücksichtigen. Darüber hinaus kann in dem Schritt 21 auch berücksichtigt werden, ob bestimmte Empfänger 8 ein Selbstabholersignal zu dem jeweiligen Objekt 2 mit der ihnen zugehörigen Zieladresse a bis e übermittelt haben, mit dem sie signalisieren, dass sie sich selbst zu dem Transportfahrzeug 1 auf dessen ihnen mitgeteilten Fahrtroute 12 bis 14 hinbewegen werden.

### BEZUGSZEICHENLISTE

- 1: Transportfahrzeug
- 2: Objekt
- 3: Fahrer
- 4: Auslieferer-Mobilkommunikationsgerät
- 5: Wohnung
- 6: Büro
- 7: Aufenthaltsort
- 8: Empfänger
- 9: Empfänger-Mobilkommunikationsgerät
- 10: Straßenkarte
- 11: Aktuelle Position des Transportfahrzeugs 1
- 12 - 14: Fahrtroute
- 15: Initialisierungsschritt
- 16: Schritt
- 17: Überprüfung
- 18- 24: Schritt
- a - e: Zieladresse
- b*, c*: Aktualisierte Zieladresse

## Patentansprüche

1. Verfahren zum Ausliefern von jeweils mit einer Zieladresse (a bis e) versehenen Objekten (2) an jeweils zum Empfang eines der Objekte (2) autorisierte, ihren Aufenthaltsort potentiell ändernde und ein Empfänger-Mobilkommunikationsgerät (9) mit sich führende Empfänger (8) unter Verwendung eines Transportfahrzeugs (1), dem ein Auslieferer-Mobilkommunikationsgerät (4) zugeordnet ist,
- wobei die Positionen der Empfänger-Mobilkommunikationsgeräte (9) ermittelt werden,
- wobei die ermittelten Positionen der Empfänger-Mobilkommunikationsgeräte (9) mit den Zieladressen (a bis e) abgeglichen werden, um zu ermitteln, ob sich der zum Empfang des jeweiligen Objekts (2) autorisierte Empfänger (8) aktuell an der zugehörigen Zieladresse (a bis e) aufhält,
- wobei die Position des Auslieferer-Mobilkommunikationsgeräts (4) ermittelt wird, und
- wobei von dem Auslieferer-Mobilkommunikationsgerät (4) ein Anzeigebild angezeigt wird, das abhängig von dem Ergebnis des Abgleichens der ermittelten Positionen der Empfänger-Mobilkommunikationsgeräte (9) mit den Zieladressen (a bis e) generiert wird,
**dadurch gekennzeichnet, dass** dann, wenn sich das Auslieferer-Mobilkommunikationsgerät (4) einem der Empfänger-Mobilkommunikationsgeräte (9) annähert, und/oder dann, wenn dies über das Auslieferer-Mobilkommunikationsgerät (4) ausgelöst wird, über das Empfänger-Mobilkommunikationsgerät (9) ein Hinweissignal ausgegeben wird.

2. Verfahren nach Anspruch 1, **dadurch gekennzeichnet, dass** das Anzeigebild eine abzufahrende Fahrtroute (12 bis 14) für das Transportfahrzeug (1) anzeigt, die nicht zu den Zieladressen (a bis e) führt, an denen sich die zugehörigen Empfänger (8) aktuell nicht aufhalten.

3. Verfahren nach Anspruch 1 oder 2, **dadurch gekennzeichnet, dass** das Anzeigebild in oder an dem Auslieferer-Mobilkommunikationsgerät (4) oder in einer stationären Zentraleinheit generiert wird, die das Anzeigebild an das Auslieferer-Mobilkommunikationsgerät (4) übermittelt.

4. Verfahren nach einem der Ansprüche 1 bis 3, **dadurch gekennzeichnet, dass** das Abgleichen der ermittelten Positionen der Empfänger-Mobilkommunikationsgeräte (9) mit den Zieladressen (a bis e) in den Empfänger-Mobilkommunikationsgeräten (9) durchgeführt wird und dass die Empfänger-Mobilkommunikationsgeräte (9) jeweils ein Ergebnissignal ausgeben, das einen Wert aufweist, wenn das Ergebnis des Abgleichens für das jeweilige Empfänger-Mobilkommunikationsgerät (9) und die zugehörige Zieladresse (a bis e) positiv ist, und/oder einen zweiten Wert, wenn das Ergebnis des Abgleichens negativ ist.

5. Verfahren nach Anspruch 4, **dadurch gekennzeichnet, dass** das Ergebnissignal an das Auslieferer-Mobilkommunikationsgerät (4) und/oder die stationäre Zentraleinheit übermittelt wird.

6. Verfahren nach einem der Ansprüche 1 bis 5, **dadurch gekennzeichnet, dass** die Empfänger-Mobilkommunikationsgeräte (9) ihre ermittelten Positionen an das Auslieferer-Mobilkommunikationsgerät (4) und/oder die Zentraleinheit übermitteln.

7. Verfahren nach einem der Ansprüche 1 bis 6, **dadurch gekennzeichnet, dass** dann, wenn ein Aktualisierungsflag zu einem der Empfänger-Mobilkommunikationsgeräte (9) gesetzt ist, die zugehörige Zieladresse (a bis e) durch die ermittelte Position des Empfänger-Mobilkommunikationsgeräts (9) ersetzt wird.

8. Verfahren nach einem der Ansprüche 1 bis 7, **dadurch gekennzeichnet, dass** das Anzeigebild abhängig von der ermittelten Position des Auslieferer-Mobilkommunikationsgeräts (4) generiert wird.

9. Verfahren nach Anspruch 8, **dadurch gekennzeichnet, dass** ein weiteres Anzeigebild auf Anfrage auf den einzelnen Empfänger-Mobilkommunikationsgeräten (9) angezeigt wird, das abhängig von der Position des Auslieferer-Mobilkommunikationsgeräts (4) generiert wird, so dass es die ermittelte Position des Auslieferer-Mobilkommunikationsgeräts (4) anzeigt.

10. Verfahren nach Anspruch 9, soweit rückbezogen auf Anspruch 2, **dadurch gekennzeichnet, dass** das weitere Anzeigebild so generiert wird, dass es die abzufahrende Fahrtroute (12 bis 14) des Transportfahrzeugs (1) anzeigt.

11. Verfahren nach Anspruch 9 oder 10, **dadurch gekennzeichnet, dass** das weitere Anzeigebild so generiert wird, dass angezeigt wird, wann die zu dem jeweiligen Empfänger-Mobilkommunikationsgerät (9) zugehörige Zieladresse (a bis e) voraussichtlich erreicht werden wird.

12. Verfahren nach einem der Ansprüche 1 bis 11, **dadurch gekennzeichnet, dass** dann, wenn dies über das jeweilige Empfänger-Mobilkommunikationsgerät (9) ausgelöst wird, ein Selbstabholersignal zu dem Objekt (2) mit der zugehörigen Zieladresse (a bis e) an das Auslieferer-Mobilkommunikationsgerät (4) übermittelt wird.

13. Verfahren nach einem der Ansprüche 1 bis 12, **dadurch gekennzeichnet, dass** über das jeweilige Empfänger-Mobilkommunikationsgerät (9) ein Autorisierungscode für den Empfang des Objekts (2) mit der zugehörigen Zieladresse (a bis e) ausgegeben wird und dass der Autorisierungscode mithilfe einer Kamera oder eines Scanners des Auslieferer-Mobilkommunikationsgeräts (4) eingelesen wird und infolge des Einlesen deaktiviert wird.

14. Verfahren nach Anspruch 13, **dadurch gekennzeichnet, dass** das Objekt (2) mit der jeweiligen Zieladresse (a bis e) zu dem eingelesenen Autorisierungscode mit einem auf dem Transportfahrzeug (1) installierten Objektausgabeautomat automatisch ausgegeben wird.

15. Verfahren nach einem der Ansprüche 1 bis 14, **dadurch gekennzeichnet, dass** die Position des Auslieferer-Mobilkommunikationsgeräts (4) und/oder die Positionen der Empfänger-Mobilkommunikationsgeräte (9) zunächst mittels des GPS oder eines assisted GPS ermittelt werden und beim Annähern des Auslieferer-Mobilkommunikationsgeräts (4) an ein bestimmtes der Empfänger-Mobilkommunikationsgeräte (9) eine Navigation des Auslieferer-Mobilkommunikationsgeräts (4) zu dem bestimmten der Empfänger-Mobilkommunikationsgeräte (9) und/oder des bestimmten der Empfänger-Mobilkommunikationsgeräte (9) zu dem Auslieferer-Mobilkommunikationsgeräts (4) mittels eines WLAN oder WPAN erfolgt, über das das Auslieferer-Mobilkommunikationsgerät (4) und das bestimmte der Empfänger-Mobilkommunikationsgeräte (9) miteinander kommunizieren und/oder Lokalisierungssignale von Beacons empfangen.
